# EUROPÄISCHE PATENTSCHRIFT

(11) **EP 4 247 598 B1**
(45) Veröffentlichungstag und Bekanntmachung des Hinweises auf die Patenterteilung: **01.01.2025**
(21) Anmeldenummer: 21823725.3
(22) Anmeldetag: 17.11.2021
(51) Int. Cl.: B25J 15/00, B25J 15/06, B25J 15/08

(54) **GREIFERANORDNUNG UND MANIPULATOR MIT EINER GREIFERANORDNUNG**
GRIPPER ARRANGEMENT AND MANIPULATOR HAVING A GRIPPER ARRANGEMENT
DISPOSITIF DE PRÉHENSION ET MANIPULATEUR DOTÉ D'UN DISPOSITIF DE PRÉHENSION

(30) Priorität: 18.11.2020 AT 510062020
(43) Veröffentlichungstag der Anmeldung: 27.09.2023
(73) Patentinhaber: TRUMPF Maschinen Austria GmbH & Co. KG., 4061 Pasching (AT)
(72) Erfinder: VERONESE, Roberto, 10023 Chieri (IT); VIDOTTO, Giovanni, 10023 Chieri (IT)
(74) Vertreter: Burger, Hannes
(86) Internationale Anmeldenummer: PCT/AT2021/060435
(87) Internationale Veröffentlichungsnummer: WO 2022/104403

(56) Entgegenhaltungen:
- CN-A- 104 555 419
- CN-A- 108 789 464
- CN-U- 204 036 462
- CN-U- 206 426 101
- JP-A- 2019 014 027
- JP-A- H06 254 627
- JP-U- H09 388
- NL-A- 8 601 306
- US-B1- 10 059 007

## Beschreibung

Die Erfindung betrifft eine Greiferanordnung zum Aufgreifen, Halten und Ablegen von Werkstücken, insbesondere von Blechwerkstücken, und einen Manipulator mit einer Greiferanordnung.

Zum Aufgreifen von Werkstücken wie beispielsweise Blechwerkstücken von einem Werkstückstapel werden gemäß dem Stand der Technik üblicherweise Manipulatoren mit Unterdruck-Greifervorrichtungen, respektive mit Sauggreifern, eingesetzt. Da Unterdruck-Greifervorrichtungen jedoch oftmals wenig vorteilhaft oder gar ungeeignet sind, um damit nach dem Aufgreifen bzw. Hochheben auch Bearbeitungsschritte an einer Biegemaschine oder dergleichen durchzuführen, werden die zu manipulierenden Werkstücke oftmals an einen zweiten Manipulator übergeben, welcher mit einem Zangengreifer ausgebildet ist. Insbesondere für kleine oder bereits gebogene Werkstücke kann eine solche Vorgehensweise zweckmäßig sein. Zwei Manipulatoren sind jedoch teuer und beanspruchen einen großen Platzbedarf. Zudem besteht hierbei auch die Gefahr von Kollisionen und die Bewegungsfreiheit der Manipulatoren kann eingeschränkt sein.

Um diesen Nachteilen Abhilfe zu schaffen, sind der Fachwelt kombinierte Manipulatoranordnungen bekannt, bei welchen ein einzelner Manipulator sowohl zum Greifen mittels Sauggreifern als auch zum Greifen mittels eines Zangengreifers ausgebildet ist. Allerdings sind die bekannten Ausbildungen in ihrer Greif- und Ansaugfunktionalität eingeschränkt und stellen somit keine vollwertigen und zufriedenstellenden Lösungen dar.

Beispielsweise stellt die JP2019014027 A einen Biegeroboter mit einem kombinierten Zangen- und Sauggreiferkopf vor. Ein Sauggreifer ist an einem verschiebbaren Rahmen angeordnet, wobei eine Haftwirkungsebene des Sauggreifers parallel zu einer Klemmebene des Zangengreifers ausgerichtet ist.

Auch die CN108927822 A offenbart eine kombiniert ausgebildete Greifervorrichtung, wobei ein Zangengreifer an seinem Stirnende mit Sauggreifern ausgebildet ist. Durch ein Bewegen der Zangenarme erfolgt zugleich ein zwangsgekoppeltes Bewegen der Sauggreifer, welche starr an den Stirnenden der Zangenarme des Zangengreifers montiert sind. Eine Haftwirkungsebene des Sauggreifers ist dabei orthogonal zur Klemmebene des Zangengreifers ausgerichtet.

Die CN 104555419 A zeigt eine automatische Sortiervorrichtung für Werkstücke. Die auf Gleitschienen angeordnete Sortiervorrichtung umfasst eine Schalenklemmbacke und eine Vakuum-Saugkopf-Gruppe, wobei die Schalenklemmbacke und die Vakuum-Saugkopf-Gruppe jeweils auf zwei gegenüberliegenden Seiten der automatischen Sortiervorrichtung angeordnet sind, sowohl die Schalenklemmbacke als auch die Vakuum-Saugkopf-Gruppe mit jeweils entsprechenden Hubantriebseinrichtungen versehen sind, zwei symmetrische Klauenhaken an der Schalenklemmbacke angeordnet sind und die Vakuumsaugkopfgruppe mit mehreren Vakuumsaugköpfen versehen ist, die mit einer Evakuierungseinrichtung in Verbindung stehen. Entsprechend der automatischen Sortiervorrichtung sind die Gleitschienen so angeordnet, dass die Sortiervorrichtung frei beweglich ist, die Schalenklemmbacke und die Vakuum-Saugkopf-Gruppe, die entsprechend mit Luftzylindern versehen sind, separat angehoben werden können und ein Tablett oder ein Werkstück selektiv bewegt werden kann; die mehreren Vakuumsaugköpfe so angeordnet sind, dass die Werkstücke in unterschiedlichen Positionen angehoben bzw. angesaugt werden können.

Die CN 204036462 U zeigt einen Greifer für einen Paletten-Manipulator. Der Greifer zeigt eine Verbindungsstelle zur Befestigung an einem Manipulator, so-wie mehrere Zangengreifer und mehrere Haftgreifer. Die Zangengreifer umfassen jeweils zwei zueinander relativbewegliche Zangenarme, welche in ihrer geschlossenen Position eine zwischen den Zangenarmen verlaufende Klemmebene bzw. eine Zangenlängsachse definieren. Die Haftgreifer umfassen einen Verstellantrieb, um in Richtung der Zangenlängsachse relativ zum Zangengreifer zwischen einer Arbeitszone und einer Bereitschaftszone positioniert zu werden. Die Klemmebene ist dabei rechtwinkelig zu einer Haftwirkungsebene und die Haftwirkungsebene ist rechtwinkelig zur Zangenlängsachse.

Die CN 206426101 U zeigt einen Greifer zum Bewegen von Objekten. Der Greifer weist eine Verbindungsstelle zur Befestigung an einem Manipulator, sowie einen Zangengreifer mit zwei Zangenarmen und zwei Haftgreifer auf. Die Haftgreifer sind auf einem horizontalen Balken horizontal verschieblich angeordnet. Die Zangenarme sind an Führungen mittels Schraubstangen vertikal verstellbar an-geordnet und umfassen Zylinder, die zum Klemmen oder Halten von Objekten mittels den Zangenarmen Verwendung finden.

Die CN 108789464 A zeigt einen Robotergreifer zum Aufnehmen von Turbinenscheibenteilen. Der Robotergreifer zum Aufnehmen von Turbinenscheibenteilen umfasst eine Montagebasis, einen Spannzylindermechanismus und eine Saugscheibenmechanik. Auf der oberen Fläche einer Installationsbasis ist ein Roboterverbindungsblock angeordnet. Der Spannzylindermechanismus umfasst einen Dreibacken-Luftzylinder. Auf der Unterseite der Installationsbasis ist ein feststehender Block angeordnet. Der Dreibacken-Luftzylinder ist an der Unterseite des feststehenden Blocks befestigt. Auf dem Dreibacken-Luftzylinder ist ein Greifer angeordnet. Der Saugscheibenmechanismus umfasst eine ringförmige Installationsplatte. An der Unterseite der Installationsbasis sind mehrere synchrone Hubluftzylinder angeordnet. Die ringförmige Installationsplatte ist mit Ausgangsstangen der synchronen Hubluftzylinder verbunden. Die ringförmige Montageplatte kann sich relativ zum Spannzylindermechanismus ungehindert aufwärts und abwärts bewegen. Mehrere nach unten gerichtete Saugscheibenanordnungen sind gleichmäßig auf der ringförmigen Installationsplatte verteilt. Die Greiferstruktur kann Befestigungsringe durch den Saugscheibenmechanismus saugen oder Turbinengehäuse durch den Spannzylindermechanismus klemmen und ein Umschalten zwischen dem Saugscheibenmechanismus und dem Spannzylindermechanismus bewirken, indem der Saugscheibenmechanismus an der Peripherie so gesteuert wird, dass er sich nach oben oder unten bewegt. Da der Robotergreifer zum Ergreifen von zwei Arten von Werkstücken geeignet ist, wird die Produktionseffizienz effektiv verbessert, und es wird eine Integrationsidee für eine automatische Turbinenscheiben-Montage-Produktionslinie bereitgestellt.

Die NL 8601306 A zeigt einen Greifer für die Pakethandhabung umfassend ein Scherengestänge vom Parallelogrammtyp und einen robotergesteuerten Antrieb. Es umfasst Klemmplatten und längenverstellbare Arme. Der Paketgreifermechanismus ist zwischen Klemmplatten angebracht und umfasst einen Saugmechanismus mit vier Saugnäpfen, die über einen Saugkasten mit zwei Führungen verbunden sind, von denen eine hohl ist, und mit dem Vakuumanschluss des Robotersystems verbunden sind. Die Führungen werden von Gleitlagern getragen, eine Führung ist mit einem Gewinde versehen und enthält eine drehbare Einstellmutter, die von einem Riemen und einem Motor angetrieben wird.

Die US 10059007 B1 zeigt Vorrichtungen mit Greifmechanismen einschließlich ausfahrbarer Finger und beschreibt Verfahren zum Manipulieren von Gegenständen unter Verwendung der Greifmechanismen. Eine beispielhafte Vorrichtung kann einen Rahmen, ein Paar Schlitten, die mit dem Rahmen gekoppelt und durch eine oder mehrere Antriebseinheiten bewegbar sind, ein Paar Finger und einen Satz von Gestängen, die das Paar Finger mit dem Paar Schlitten verbinden, umfassen. Die eine oder mehreren Antriebseinheiten sind betreibbar, um zu bewirken, dass sich die Finger aufeinander zu und voneinander wegbewegen.

Aufgabe der vorliegenden Erfindung war es, die Nachteile des Standes der Technik zu überwinden und Mittel zur Verfügung zu stellen, mittels derer Werkstücke für eine Bearbeitungsmaschine, insbesondere für eine Biegemaschine, auf schnelle und effiziente Art und Weise manipuliert werden können.

Diese Aufgabe wird durch eine Greiferanordnung und einen Manipulator gemäß den Ansprüchen gelöst.

Die Erfindung betrifft eine Greiferanordnung zum Aufgreifen, Halten und Ablegen von Werkstücken, insbesondere von Blechwerkstücken, umfassend eine Verbindungsschnittstelle zur Befestigung an einem Manipulator und einen Zangengreifer mit einem ersten Zangenarm und einem zweiten Zangenarm. Die Zangenarme sind mittels eines Zangenantriebs zueinander relativbeweglich und definieren in ihrer geschlossenen Position eine zwischen den Zangenarmen verlaufende Klemmebene. Die Zangenarme definieren dabei in ihrer geschlossenen Position eine parallel zu den Zangenarmen und in der Klemmebene verlaufende Zangenlängsachse. Die Greiferanordnung umfasst zudem einen Haftgreifer mit zumindest einem Unterdruck-Greiferelement oder mit zumindest einem Magnet-Greiferelement. Der Haftgreifer weist eine Haftwirkungsebene zum Halten eines Werkstücks auf und ist mittels eines Verstellantriebs entlang einer Verstellachse in Richtung der Zangenlängsachse relativ zum Zangengreifer zwischen einer Arbeitszone und einer Bereitschaftszone verschiebbar. Dabei ist vorgesehen, dass die Klemmebene und die Haftwirkungsebene zueinander rechtwinkelig ausgerichtet sind, und dass die Haftwirkungsebene rechtwinkelig zur Zangenlängsachse verläuft.

Durch die erfindungsgemäße Ausbildung einer Greiferanordnung werden zwei vollwertige Greifer, also zwei jeweils für sich voll funktionsfähige Greifer, in einer einzigen, baulich integrierten bzw. kombinierten Greiferanordnung realisiert. Unter dem Begriff "vollwertiger Greifer" wird hierbei eine Zangen- oder Haftgreiferanordnung verstanden, welche in ihrer Funktionalität, Stabilität und Bewegungsfreiheit einer einzelnen, baulich eigenständigen Zangen- oder Haftgreiferanordnung zumindest weitgehend gleichzusetzten ist. So ist der Funktionsumfang des Zangengreifers der erfindungsgemäßen Greiferanordnungen durch die gemeinsame Ausbildung mit dem Haftgreifer demnach nicht oder lediglich in geringem Maße beeinflusst. Dasselbe gilt auch für den Haftgreifer.

Weder der Zangengreifer noch der Haftgreifer sind - im Vergleich zu zwei separat bzw. eigenständig ausgebildeten Greiferanordnungen, welche jeweils an einem eigenen Manipulator befestigt sind - in ihrer Funktionalität eingeschränkt. So werden gegenseitige Blockaden der Greifer zumindest weitgehend vermieden. Durch die erfindungsgemäße Anordnung der beiden Greifer wird ein Risiko von gegenseitigen Behinderungen oder gar Kollisionen zumindest weitgehend hintangehalten oder sogar gänzlich reduziert. Die erfindungsgemäße Ausbildung besticht dabei durch ein hohes Maß an Bewegungsfreiheit beider Greifer.

Insbesondere, wenn der Haftgreifer in seine Bereitschaftszone verschoben ist, kann mit dem Zangengreifer ohne Bewegungseinschränkung gearbeitet werden. Dabei wird der Zangengreifer weder durch die Unterdruck-Greiferelemente oder Magnet-Greiferelement selbst, noch durch etwaige Pneumatik-Leitungen behindert. Zudem kann ein Umgreifen, also eine direkte Werkstückübernahme vom Haftgreifer auf den Zangengreifer und vice versa erfolgen, weil der Haftgreifer entlang seiner Verstellachse in Richtung der Zangenlängsachse verschiebbar ist und weil die Klemm- und Haftwirkungsebene zueinander rechtwinkelig ausgerichtet sind. So sind die Greifer bedarfsweise auch gleichzeitig nutzbar. Verlustzeit infolge eines Zwischenarbeitsschrittes, wie eines Ablegens des Werkstücks, werden damit reduziert.

Indem beide Greifer als vollwertige Greifer einsetzbar sind, wird die Anzahl an erforderlichen Umgreif- oder auch Repositionier-Arbeitsgängen reduziert und somit der gesamte Manipulations- und Bearbeitungsprozess effizienter. Indem die Klemmebene und die Haftwirkungsebene zueinander rechtwinkelig sind und die Haftwirkungsebene rechtwinkelig zur Zangenlängsachse verläuft, sind weniger Manipulatorbewegungen erforderlich, respektive sind weniger Repositionierungen des Manipulators notwendig, um die erforderlichen Arbeitsschritte durchzuführen. Zudem können auch die von einem Manipulator auszuführenden Verstellwege für die gesamte Greiferanordnung möglichst kurz gehalten werden. Dies insbesondere nach einem ausgeführten Bearbeitungs- bzw. Biegeschritt, nach welchem das Werkstück bzw. das Blechbiegeteil zueinander abgewinkelte Schenkel aufweist. Damit werden die Taktzeiten der Werkstückbearbeitung reduziert und demzufolge die Wirtschaftlichkeit des Prozesses erhöht.

Zudem sind die beiden Greifer in zumindest annähernd gleichem Ausmaß belastbar und stabil und können somit dieselben Werkstückgewichte manipulieren. Damit können Schäden am Manipulator infolge von Überlastung und auch Unfälle und Gefährdungen für einen Bediener zumindest weitgehend hintangehalten werden.

Eine Verschiebung des Haftgreifers entlang der Verstellachse kann dabei stufenlos erfolgen und so eine optimale bzw. gewünschte Position einstellbar sein. Dabei kann es sich bei der Bereitschaftszone bzw. der Arbeitszone bevorzugt jeweils um Bereiche entlang der Verstellachse handeln. Bevorzugt ist der Haftgreifer bei Einnahme einer Position in der Bereitschaftszone nicht betätigbar. Bevorzugt kann der Haftgreifer eine Mehrzahl an vorteilhaften Positionen in der Arbeitszone einnehmen und zwischen einer axial äußersten und einer axial innersten Arbeitszone verschoben werden.

Der Fachwelt ist eine Vielzahl an Ausbildungen von Haftgreifern und Zangengreifern bekannt, auf welche in diesem Dokument nicht im Detail eingegangen wird. Sowohl ein Unterdruck-Greiferelement, als auch ein Magnet-Greiferelement können dabei pneumatisch aktivierbar sein. Während Unterdruck-Greiferelemente als Sauggreifer mit einem zumeist napfförmigen Saugelement ausgebildet sein können, können Magnet-Greiferelemente einen Permanentmagneten umfassen, welcher Permanentmagnet mittels eines druckaktivierbaren Kolbens bzw. Zylinders verschiebbar sein kann.

Weiters ist vorgesehen, dass der zweite Zangenarm gegenüber dem Zangenantrieb starr angeordnet ist und dass der erste Zangenarm relativ zum zweiten Zangenarm beweglich gelagert ist.

Mittels derart ausgebildeter Zangenarme kann ein Risiko von Kollisionen zwischen Zangengreifer und Haftgreifer vermindert oder gar verhindert werden. Dies vor allem auch deshalb, weil eine derartige Anordnung mechanisch einfach kontrollierbar ist, wenn der Haftgreifer direkt unter bzw. im Nahbereich des starren, also nicht beweglichen Zangenarmes angeordnet ist. Dabei können Zangengreifer und Haftgreifer gegebenenfalls auch sehr nahe bzw. knapp zueinander positioniert werden. Somit kann ein kompakter Aufbau der Greiferanordnung realisiert werden.

Weiters ist vorgesehen, dass eine Schwenkachse des ersten Zangenarms rechtwinkelig zur Zangenlängsachse und in der Klemmebene ausgebildet ist, wobei der erste Zangenarm um die Schwenkachse schwenkbar ausgebildet ist. Dies ist insbesondere auch dann zweckmäßig, wenn einer der Zangenarme starr und der andere beweglich ausgebildet ist.

Des Weiteren kann es zweckmäßig sein, wenn die Zangenlängsachse und die Verstellachse koaxial positioniert sind. Damit kann eine Belastbarkeit der Greiferanordnung, respektive des Manipulators erhöht werden und gegebenenfalls auch schwere oder große Werkstücke manipuliert werden. Zudem kann die Greiferanordnung bei koaxialer Anordnung der Achsen baulich kompakter erfolgen, wodurch das Risiko von Kollisionen oder Bewegungsblockaden zusätzlich reduziert sein kann. Insbesondere kann eine koaxiale Anordnung auch ein Drehen von Werkstücken ermöglichen bzw. erleichtern, wodurch die Einsatzmöglichkeiten der Greiferanordnung zusätzlich erweitert werden können.

Ferner kann vorgesehen sein, dass die Zangenlängsachse und die Verstellachse lageverschieden positioniert sind. Eine derartige Weiterbildung kann vorteilhaft sein, um die Einsatzmöglichkeiten des Zangengreifers zu erweitern. So können dabei beispielsweise größere Öffnungsweiten der Zangenarme realisierbar sein.

Darüber hinaus kann vorgesehen sein, dass zumindest drei Unterdruck-Greiferelemente oder zumindest drei Magnet-Greiferelemente ausgebildet sind, welche ring-förmig um die Zangengreiferachse angeordnet sind. Dabei kann es auch vorteilhaft sein, wenn die Unterdruck-Greiferelemente oder Magnet-Greiferelemente bei in die Arbeitszone verschobenem Haftgreifer um den Zangengreifer angeordnet sind. Eine derartige Weiterbildung kann eine überaus belastbare Anordnung darstellen. Indem mehrere Greiferelemente ringförmig und zentriert um den Zangengreifer positioniert sind, kann eine große Anzahl an Greiferelementen realisiert sein. Damit kann ein vollwertiger Haftgreifer realisiert sein, welcher auch zum Manipulieren großer, flächiger bzw. sperriger Werkstücke geeignet ist. Zudem kann mittels dieser Weiterbildung ein Umgreifen vom Zangengreifer auf den Haftgreifer und vice versa erleichtert werden. Vorteilhafterweise können die Unterdruck-Greiferelemente bzw. die Magnet-Greiferelemente dabei in gleichem Abstand zur Verstellachse angeordnet sein. Dies insbesondere auch dann, wenn die Zangenlängsachse und die Verstellachse koaxial positioniert sind.

Gemäß einer Weiterbildung ist es möglich, dass die Zangenlängsachse und eine Zentralachse der Verbindungsschnittstelle zu einem Manipulator koaxial positioniert sind. Damit kann eine hochbelastbare Position für die Greiferanordnung realisiert sein, indem dieser zentral am äußersten Manipulatorarm ausgebildet ist.

Darüber hinaus kann vorgesehen sein, dass der erste Zangenarm und der zweite Zangenarm zueinander linearbeweglich sind. Damit können auch Werkstücke mit unterschiedlichen Werkstoffdicken bzw. Blechstärken zuverlässig aufgegriffen werden und dabei ein konstanter Anpressdruck gewährleistet sein.

Des Weiteren kann vorgesehen sein, dass die Haftwirkungsebene bei Einnahme der axial äußersten Arbeitszone des Haftgreifers ein Stirnende des Zangengreifers in axialer Richtung der Verstellachse überragt. Indem der Haftgreifer derart weit ausgeschoben werden kann und somit eine Spitze des Zangengreifers bzw. dessen Stirnende überragt, kann ein Werkstück gegebenenfalls leichter aufgegriffen werden. Etwaige Behinderungen bzw. Bewegungseinschränkungen durch den Zangengreifer können somit vermieden werden.

Gemäß einer besonderen Ausprägung ist es möglich, dass die Zangenarme bei in die Arbeitszone verschobenem Haftgreifer mittels wenigstens eines Anschlag- oder Sperrelements oder gesteuert durch eine Steuervorrichtung nicht in eine teilweise oder maximal geöffnete Position überführbar sind. Damit kann ein effizientes Sicherheitsfeature zur Kollisionsvermeidung- oder Verhinderung realisiert sein.

Entsprechend einer vorteilhaften Weiterbildung kann vorgesehen sein, dass der Zangenantrieb und der Verstellantrieb unabhängig voneinander und gleichzeitig aktivierbar sind. Damit kann ein Umgreifen bzw. eine Werkstückübergabe vom Zangengreifer auf den Haftgreifer und vice versa erleichtert werden. So stellt kann mittels dieser Weiterbildung eine zusätzliche Flexibilisierung der Einsatzmöglichkeiten der Greiferanordnung erzielt werden.

Insbesondere kann es vorteilhaft sein, wenn der Zangenantrieb und/oder der Verstellantrieb einen druckbetriebenen Zylinder umfasst, bevorzugt einen Pneumatikzylinder umfasst.

Ferner kann vorgesehen sein, dass die druckbetriebenen Zylinder mittels einer gemeinsamen Druckleitung druckbeaufschlagbar sind, wobei in der Druckleitung zumindest ein Ventil ausgebildet ist, welches Ventil mittels einer Steuervorrichtung steuerbar ist. Insbesondere durch die Ausbildung gemeinsamer Druckleitungen und auch Druckversorgung kann eine baulich einfache Konstruktion und damit kompakte Bauweise realisiert werden. Dies kann sich weiters positiv auf die Bewegungsfreiheit des Haftgreifers und des Zangengreifers auswirken. Vorzugsweise ist das Ventil als Umschaltventil ausgebildet, welches eine selektive Druckbeaufschlagung des Verstellantriebs und des Zangenantriebs ermöglichen kann. Gegebenenfalls kann es auch von Vorteil sein, wenn mittels des Ventils bzw. Umschaltventils auch die Greiferelemente versorgbar bzw. druckbeaufschlagbar sind.

Darüber hinaus kann vorgesehen sein, dass das Ventil dazu ausgebildet ist, die druckbetriebenen Zylinder und das zumindest eine Unterdruck-Greiferelement oder das zumindest eine Magnet-Greiferelement zeitgleich zu versorgen.

Vorteilhaft ist auch eine Ausprägung, gemäß welcher vorgesehen sein kann, dass der druckbetriebene Zylinder des Verstellantriebs einen ringförmigen Zylinderraum aufweist, welcher ringförmige Zylinderraum um den druckbetriebenen Zylinder des Zangenantriebs angeordnet ist, wobei eine Zylinderachse des druckbetriebenen Zylinders koaxial zur Verstellachse positioniert ist. Dadurch kann die Bauweise noch kompakter ausgeführt sein und die Gefahr von Kollisionen oder Bewegungseinschränkungen vermindert werden.

Die Erfindung betrifft auch einen Manipulator mit einer Greiferanordnung zum Aufgreifen, Halten und Ablegen von Werkstücken, insbesondere von Blechwerkstücken, wobei die Greiferanordnung nach einem der Ansprüche ausgebildet ist. Die damit einhergehenden Vorteile sind den voranstehenden Beschreibungsteilen zu entnehmen.

Zum besseren Verständnis der Erfindung wird diese anhand der nachfolgenden Figuren näher erläutert.

Es zeigen jeweils in stark vereinfachter, schematischer Darstellung:
- Fig. 1: eine Seitenansicht einer Biegemaschine und eines Manipulators mit einer Greiferanordnung mit Haftgreifer in seiner Arbeitszone;
- Fig. 2: eine weitere Seitenansicht der Biegemaschine und des Manipulators aus Figur 1 mit Haftgreifer in seiner Bereitschaftszone;
- Fig. 3: eine Greiferanordnung mit Magnet-Greiferelementen in dreidimensionaler Ansicht;
- Fig. 4: eine weitere Greiferanordnung mit Unterdruck-Greiferelementen in dreidimensionaler Ansicht;
- Fig. 5: eine Schnittansicht einer weiteren Greiferanordnung in einer ersten Stellung;
- Fig. 6: eine Schnittansicht der Greiferanordnung der Figur 5 in einer zweiten Stellung;
- Fig. 7: eine Schnittansicht der Greiferanordnung der Figur 5 in einer dritten Stellung;
- Fig. 8: eine Schnittansicht einer weiteren Greiferanordnung in einer ersten Stellung;
- Fig. 9: eine Schnittansicht der Greiferanordnung der Figur 8 in einer zweiten Stellung;
- Fig. 10: eine Schnittansicht der Greiferanordnung der Figur 8 in einer dritten Stellung.

Einführend sei festgehalten, dass in den unterschiedlich beschriebenen Ausführungsformen gleiche Teile mit gleichen Bezugszeichen bzw. gleichen Bauteilbezeichnungen versehen werden, wobei die in der gesamten Beschreibung enthaltenen Offenbarungen sinngemäß auf gleiche Teile mit gleichen Bezugszeichen bzw. gleichen Bauteilbezeichnungen übertragen werden können. Auch sind die in der Beschreibung gewählten Lageangaben, wie z.B. oben, unten, seitlich usw. auf die unmittelbar beschriebene sowie dargestellte Figur bezogen und sind diese Lageangaben bei einer Lageänderung sinngemäß auf die neue Lage zu übertragen.

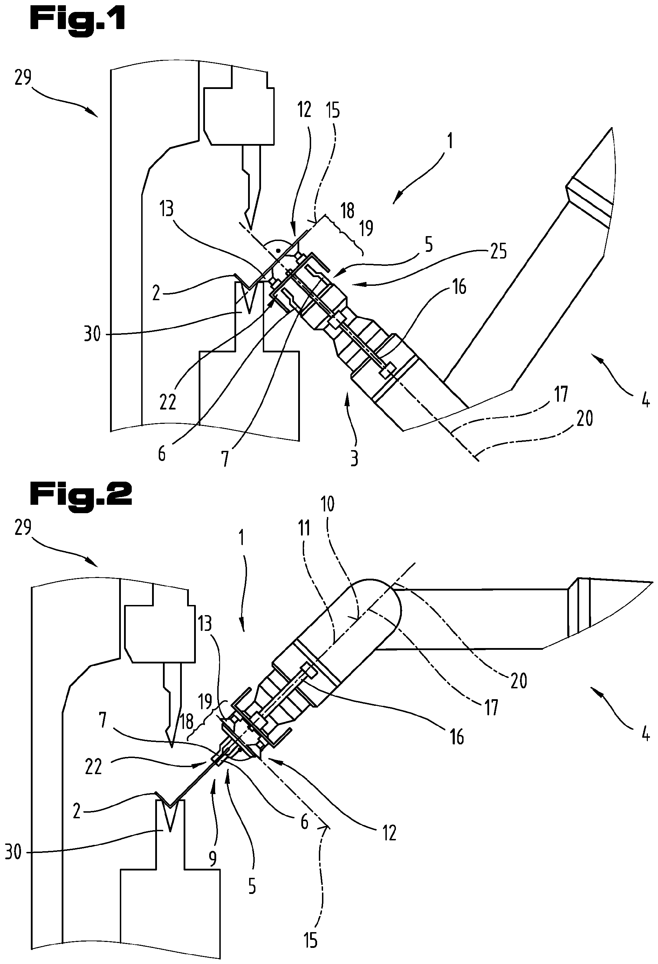

In den Figuren 1 und 2 sind beispielhaft zwei Greifpositionen bzw. Arbeitsstellungen eines Manipulators 4 mit einer Greiferanordnung 1 gezeigt. Der Manipulator 4 führt dabei Arbeitsbewegungen bzw. Manipulationen an einem Werkstück 2 durch, wobei das Werkstück 2 zur Bearbeitung in einer exemplarisch gezeigten Biegemaschine 29 vorgesehen ist. Natürlich kann anstelle der Biegemaschine 29 auch jede weitere Bearbeitungsmaschine vorgesehen sein. Bei dem Werkstück 2 handelt es sich im gezeigten Beispiel um ein L-förmig abgekantetes Blechwerkstück.

Die Greiferanordnung 1 umfasst eine Verbindungsschnittstelle 3 zur Befestigung an dem dargestellten Manipulator 4. Des Weiteren ist die Greiferanordnung 1 mit einem Zangengreifer 5 ausgebildet, welcher einen ersten Zangenarm 6 und einen zweiten Zangenarm 7 umfasst. Die Zangenarme 6, 7 sind mittels eines Zangenantriebs 8 zueinander relativbeweglich und definieren in ihrer geschlossenen Position 9 eine zwischen den Zangenarmen 6, 7 verlaufende Klemmebene 10. Die geschlossene Position 9 der Zangenarme 6, 7 ist in der Figur 2 veranschaulicht. Zudem definieren die Zangenarme 6, 7 in ihrer geschlossenen Position 9 eine parallel zu den Zangenarmen 6, 7 und in der Klemmebene 10 verlaufende Zangenlängsachse 11.

Die Greiferanordnung 1 umfasst zudem einen Haftgreifer 12 mit zumindest einem Unterdruck-Greiferelement 13 oder mit zumindest einem Magnet-Greiferelement 14, wobei der Haftgreifer 12 in den Figuren 1 und 2 mit Unterdruck-Greiferelementen 13 ausgebildet ist. Der Haftgreifer 12 weist eine Haftwirkungsebene 15 zum Halten von Werkstücken 2 auf und ist mittels eines Verstellantriebs 16 entlang einer Verstellachse 17 in Richtung der Zangenlängsachse 11 relativ zum Zangengreifer 5 zwischen einer Arbeitszone 18 und einer Bereitschaftszone 19 verschiebbar. In der Figur 1 ist der Haftgreifer 12 in eine Position in der Arbeitszone 18 verschoben und hält bzw. positioniert das Werkstück 2 in der exemplarisch gezeigten Biegemaschine 29, respektive auf einem Unterwerkzeug 30 der Biegemaschine 29. Das Halten kann dabei durch Versorgung der Unterdruck-Greiferelemente 13 mit Unterdruck erfolgen. In der Figur 2 ist der Haftgreifer 12 in einer Position in der Bereitschaftszone 19 gezeigt. Mittels des Zangengreifers 5 wird hierbei das Werkstück 2 in der Biegemaschine 29 gehalten. In den Figuren 1 und 2 ist gezeigt, dass die Klemmebene 10 und die Haftwirkungsebene 15 zueinander rechtwinkelig ausgerichtet sind, und auch, dass die Haftwirkungsebene 15 rechtwinkelig zur Zangenlängsachse 11 verläuft.

Die Zangenlängsachse 11 und die Verstellachse 17 können lageverschieden positioniert sein. Alternativ ist es aber auch denkbar, dass die Zangenlängsachse 11 und die Verstellachse 17 koaxial positioniert sind. Die Zangenlängsachse 11 und eine Zentralachse 20 der Verbindungsschnittstelle 3 zum Manipulator 4 können koaxial positioniert sein.

Der erste Zangenarm 6 und der zweite Zangenarm 7 können zueinander linearbeweglich ausgebildet sein. Dabei können die Zangenarme synchron, aber auch unabhängig voneinander sowie auch einzeln beweglich sein. Zweckmäßigerweise kann die Haftwirkungsebene 15 bei Einnahme der axial äußersten Arbeitszone 18 des Haftgreifers 12 ein Stirnende 22 des Zangengreifers 5 in axialer Richtung der Verstellachse 17 überragen, so wie dies in der Figur 1 veranschaulicht ist. Der Zangenantrieb 8 und der Verstellantrieb 16 können unabhängig voneinander und gleichzeitig aktivierbar sein.

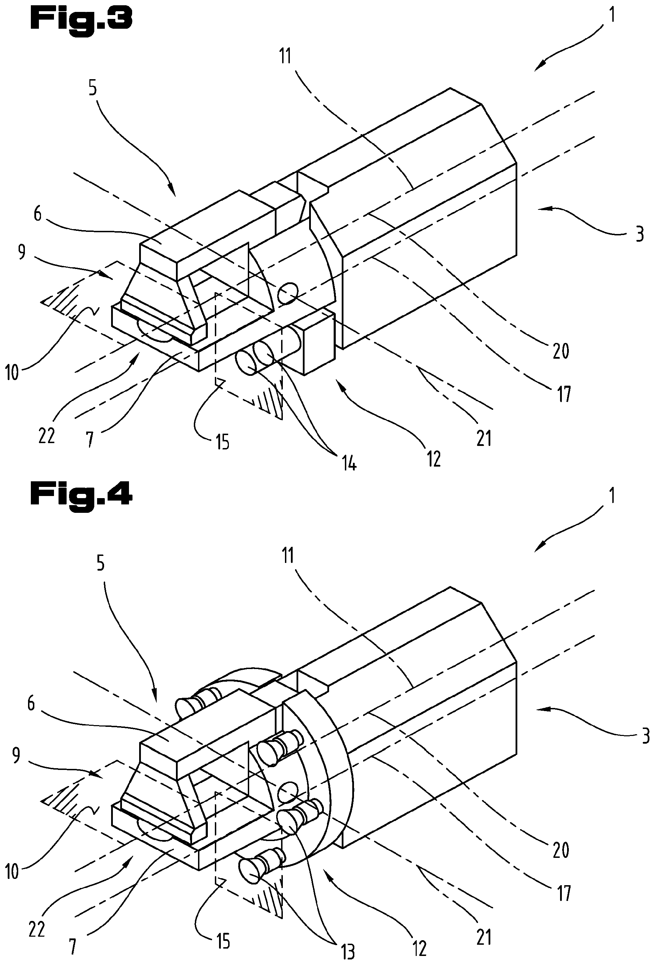

In den Figuren 3 und 4 sind zwei denkbare Ausführungsformen von Greiferanordnungen 1 in dreidimensionaler Ansicht gezeigt. Die Greiferanordnung 1 in der Figur 3 ist dabei mit einem Haftgreifer 12 mit Magnet-Greiferelementen 14 ausgebildet, während die Greiferanordnung 1 in der Figur 4 einen Haftgreifer 12 mit Unterdruck-Greiferelementen 13 aufweist. Um unnötige Wiederholungen zu vermeiden wird auf die detaillierte Beschreibung in den vorangegangenen Figuren 1 und 2 verwiesen bzw. Bezug genommen, wobei für gleiche Teile gleiche Bezugszeichen bzw. Bauteilbezeichnungen wie in den vorangegangenen Figuren 1 und 2 verwendet werden.

Die Greiferanordnungen 1 in den Figuren 3 und 4 umfassen dabei eine Verbindungsschnittstelle 3 zur Befestigung an einem Manipulator 4, einen Zangengreifer 5 und einen Haftgreifer 12. Der Zangengreifer 5 ist mit einem ersten Zangenarm 6 und mit einem zweiten Zangenarm 7 ausgebildet, welche mittels eines Zangenantriebs 8 zueinander relativbeweglich sind und welche in ihrer geschlossenen Position 9 eine zwischen den Zangenarmen 6, 7 verlaufende Klemmebene 10 definieren. Die Zangenarme 6, 7 definieren zudem in ihrer geschlossenen Position 9 eine parallel zu den Zangenarmen 6, 7 und in der Klemmebene 10 verlaufende Zangenlängsachse 11. Der Haftgreifer 12 ist entweder gemäß dem Beispiel in der Figur 4 mit zumindest einem Unterdruck-Greiferelement 13 gemäß dem Beispiel in der Figur 3 mit zumindest einem Magnet-Greiferelement 14 ausgebildet. Dabei weist der Haftgreifer 12 eine Haftwirkungsebene 15 zum Halten eines Werkstücks 2 auf, wobei der Haftgreifer 12 mittels eines Verstellantriebs 16 entlang einer Verstellachse 17 in Richtung der Zangenlängsachse 11 relativ zum Zangengreifer 5 zwischen einer Arbeitszone 18 und einer Bereitschaftszone 19 verschiebbar ist. Wie auch in den Figuren 1 und 2, sind die Klemmebene 10 und die Haftwirkungsebene 15 zueinander rechtwinkelig ausgerichtet, und die Haftwirkungsebene 15 verläuft rechtwinkelig zur Zangenlängsachse 11.

In beiden Greiferanordnungen 1 in den Figuren 3 und 4 ist gezeigt, dass der zweite Zangenarm 7 gegenüber dem Zangenantrieb 8 starr angeordnet sein kann und dass der erste Zangenarm 6 relativ zum zweiten Zangenarm 7 beweglich gelagert ist. Dabei kann zur Vermeidung von Kollisionen und auch zur Erhöhung der Bewegungsfreiheit der Haftgreifer 12 unterhalb des starren, zweiten Zangenarmes 7 angeordnet sein, so wie dies in der Figur 3 dargestellt ist. Die beiden Figuren 3 und 4 zeigen auch, dass eine Schwenkachse 21 des ersten Zangenarms 6 rechtwinkelig zur Zangenlängsachse 11 und parallel zur Klemmebene 10 oder in der Klemmebene 10 ausgebildet sein kann, wobei der erste Zangenarm 6 um die Schwenkachse 21 schwenkbar ausgebildet sein kann.

Während bei der Greiferanordnung 1 in der Figur 3 die Zangenlängsachse 11 und die Verstellachse 17 lageverschieden positioniert sind, sind die Zangenlängsachse 11 und die Verstellachse 17 in der Figur 4 koaxial positioniert gezeigt. Gemäß dem Ausführungsbeispiel in der Figur 4 können zumindest drei - oder gemäß dem Beispiel auch sechs - Unterdruck-Greiferelemente 13 ausgebildet sein, welche ringförmig um die Zangenlängsachse 11 angeordnet sein können. Die Unterdruck-Greiferelemente 13 können dabei in einem konstanten Abstand von der Verstellachse 17 bzw. der Zentralachse des ringförmigen Haftgreifers 12 beabstandet sein.

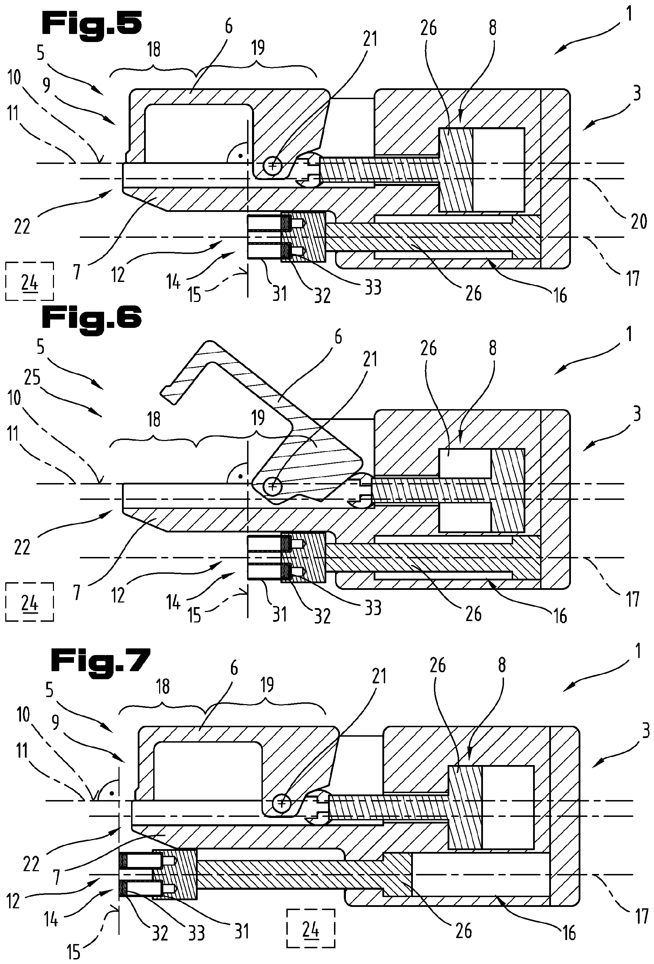

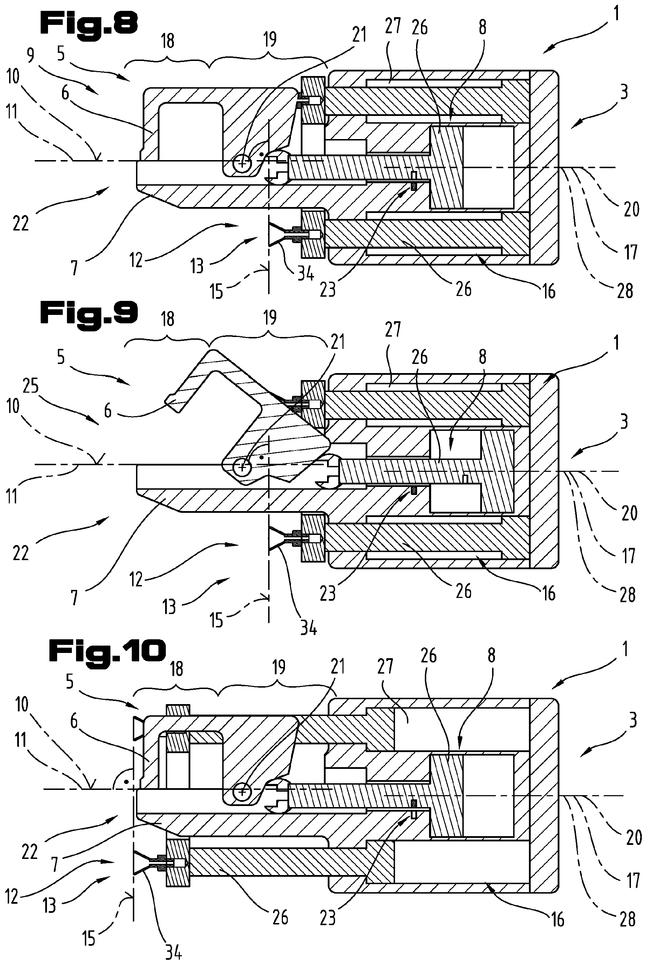

In den Figuren 5, 6 und 7 sind Schnittansichten einer weiteren Greiferanordnung 1 gezeigt, wobei die Greiferanordnung 1 ähnlich wie die in der Figur 3 gezeigte Ausführungsform ausgebildet ist. Gezeigt sind dabei beispielhaft drei denkbare Positionen bzw. Arbeitsstellungen der Greiferanordnung 1. Die Figuren 8, 9 und 10 zeigen ebenfalls Schnittansichten einer weiteren Greiferanordnung 1, wobei diese Greiferanordnung 1 mit jener in der Figur 4 vergleichbar ist. Gezeigt sind dabei dieselben Arbeitspositionen, wie in den Figuren 5, 6 und 7. Hier sei abermals auf die vorangegangenen Beschreibungen hingewiesen, um unnötige Wiederholungen zu vermeiden. In den Ausführungsbeispielen gemäß den Figuren 5 bis 10 ist hierbei vorgesehen, dass die Klemmebene 10 und die Haftwirkungsebene 15 zueinander rechtwinkelig ausgerichtet sind, und dass die Haftwirkungsebene 15 rechtwinkelig zur Zangenlängsachse 11 verläuft. An dieser Stelle sei insbesondere darauf hingewiesen, dass die nachfolgende Funktionsbeschreibung der Greiferanordnungen 1, wie deren Antriebe und auch deren Greiferelemente lediglich beispielhaft zu verstehen ist und selbstverständlich jede denkbare Ausbildung möglich ist. So ist beispielsweise zur Ansteuerung der Antriebe und auch zur Aktivierung der Greiferelemente eine Vielzahl vorteilhafter Ausgestaltungen möglich.

Insbesondere in den Figuren 5, 6 und 7 ist gezeigt, dass die Zangenarme 6, 7 bei in die Arbeitszone 18 verschobenem Haftgreifer 12 gesteuert durch eine Steuervorrichtung 24 nicht in eine teilweise oder maximal geöffnete Position 25 überführbar sind. Alternativ dazu ist in den Figuren 8 und 9 und insbesondere in der Figur 10 gezeigt, dass die Zangenarme 6, 7 bei in die Arbeitszone 18 verschobenem Haftgreifer 12 mittels wenigstens eines Anschlag- oder Sperrelements 23 nicht in eine teilweise oder maximal geöffnete Position 25 überführbar sind. Das Anschlag- oder Sperrelement 23 ist in den Figuren 8, 9 und 10 dabei lediglich grobschematisch skizziert. So kann das Anschlag- oder Sperrelement 23 bei voll ausgeschobenem Haftgreifer 12 eine Bewegung des Zangenantriebs 8 bzw. des druckbetriebenen Zylinders 26 des Zangenantriebs 8 sperren bzw. blockieren. Alternativ und nicht figürlich gezeigt kann es sich bei dem Anschlag- oder Sperrelement 23 aber auch um den Haftgreifer 12 selbst oder um ein mit dem Haftgreifer 12 ausgebildetes Werkstück handeln. So kann dieser, beispielsweise bei ringförmiger Ausbildung, ein ungewünschtes Öffnen der Zangenarme 6, 7 verhindern.

Vorteilhafterweise können der Zangenantrieb 8 und der Verstellantrieb 16 jeweils einen druckbetriebenen Zylinder 26 umfassen, wobei es sich bei den druckbetriebenen Zylindern 26 bevorzugt um Pneumatikzylinder handelt. Zweckmäßigerweise sind die druckbetriebenen Zylinder 26 mittels einer gemeinsamen Druckleitung druckbeaufschlagbar. In der Druckleitung kann dabei zumindest ein Ventil ausgebildet sein, welches Ventil mittels einer Steuervorrichtung 24 steuerbar sein kann. Es kann gegebenenfalls auch sein, dass das Ventil zur zeitgleichen Versorgung der druckbetriebenen Zylinder 26 und des zumindest einen Unterdruck-Greiferelements 13, bzw. des zumindest einen Magnet-Greiferelements 14 ausgebildet ist. Es kann jedoch auch zweckmäßig sein, wenn das zumindest eine Unterdruck-Greiferelement 13 bzw. das zumindest eine Magnet-Greiferelement 14 mit Unterdruck betrieben werden. Aus Gründen der Übersichtlichkeit handelt es sich bei den Figuren 5 bis 10 um grob schematische Darstellungen bzw. Schnittansichten. Aus diesem Grund sind weder Steuerleitungen, noch Druckleitungen oder Ventile figürlich gezeigt.

In den Figuren 8, 9 und 10 ist gezeigt, dass der druckbetriebene Zylinder 26 des Verstellantriebs 16 einen ringförmigen Zylinderraum 27 aufweisen kann, welcher ringförmige Zylinderraum 27 um den druckbetriebenen Zylinder 26 des Zangenantriebs 8 angeordnet sein kann, wobei eine Zylinderachse 28 des druckbetriebenen Zylinders 26 koaxial zur Verstellachse 17 positioniert sein kann.

Die - stark schematisch und lediglich exemplarisch skizzierten - Magnet-Greiferelemente 14 in den Figuren 5, 6 und 7 sind mit einem hohlzylindrischen Körper 31 ausgebildet und umfassen einen zylinderförmigen Permanentmagneten 32, welcher zusammen mit einem druckbeaufschlagbaren Element 33 in dem hohlzylindrischen Körper 31 Aufnahme findet. Bei Druckbeaufschlagung des Elements 33 wird dieser zusammen mit dem Permanentmagneten 32 an die oder zumindest in den Nahbereich der Haftwirkungsebene 15 verschoben. Dadurch können Werkstücke 2 magnetisch an der Haftwirkungsebene 15 gehalten werden. Alternativ dazu sind die ebenfalls stark schematisch skizzierten Unterdruck-Greiferelemente 13 in den Figuren 8, 9 und 10 sind mit Saugnäpfen 34 ausgebildet.

Die Figuren 5 und 8 zeigen jeweils dieselbe Arbeitsstellung, bei welcher der Haftgreifer 12 in seine Bereitschaftszone 19 verschoben ist. Der druckbetriebene Zylinder 26 des Verstellantriebs 16 ist dabei nicht druckbeaufschlagt. Der druckbetriebene Zylinder 26 des Zangenantriebs 8 ist in dieser Arbeitsstellung druckbeaufschlagt und bewirkt dabei ein Schließen der Zangenarme 6, 7. Somit befindet sich der Zangengreifer 5 in seiner geschlossenen Position 9. Beispielsweise können die druckbetriebenen Zylinder 26 einfachwirkend ausgebildet sein und mittels - nicht dargestellter - Rückstellfedermechanismen in dieser Stellung gehalten werden. Natürlich wäre es auch denkbar und gegebenenfalls zweckmäßig, dass die druckbetriebenen Zylinder 26 doppelwirkend ausgebildet ist.

In den Figuren 6 und 9 sind die Haftgreifer 12 in derselben Stellung gezeigt, wie in den Figuren 5 und 8. Der druckbetriebene Zylinder 26 des Zangenantriebs 8 ist hierbei jedoch nicht mehr druckbeaufschlagt und somit in seiner Ruhestellung gezeigt. Indem der druckbetriebene Zylinder 26 des Zangenantriebs 8 seine Ruhestellung einnimmt, öffnet der erste Zangenarm 6, wobei er entlang seiner Schwenkachse 21 verschwenkt wird. Somit befindet sich der Zangengreifer 5 in seiner geöffneten Position 25.

In den Figuren 7 und 10 ist der druckbetriebene Zylinder 26 des Zangengreifers 5 analog zu den Figuren 5 bzw. 8 druckbeaufschlagt und der erste Zangenarm 6 somit geschlossen, respektive der Zangengreifer 5 in seiner geschlossenen Position 9. Der druckbetriebene Zylinder 26 des Haftgreifers 12 ist in seiner äußersten Stellung und somit der Haftgreifer 12 die Arbeitszone 18 verschoben. Dabei überragt der Haftgreifer 12 das Stirnende 22 des Zangengreifers 5 in axialer Richtung der Verstellachse 17.

Die Ausführungsbeispiele zeigen mögliche Ausführungsvarianten, wobei an dieser Stelle bemerkt sei, dass die Erfindung nicht auf die speziell dargestellten Ausführungsvarianten derselben eingeschränkt ist, sondern vielmehr auch diverse Kombinationen der einzelnen Ausführungsvarianten untereinander möglich sind und diese Variationsmöglichkeit aufgrund der Lehre zum technischen Handeln durch gegenständliche Erfindung im Können des auf diesem technischen Gebiet tätigen Fachmannes liegt.

Der Schutzbereich ist durch die Ansprüche bestimmt. Die Beschreibung und die Zeichnungen sind jedoch zur Auslegung der Ansprüche heranzuziehen. Einzelmerkmale oder Merkmalskombinationen aus den gezeigten und beschriebenen unterschiedlichen Ausführungsbeispielen können für sich eigenständige erfinderische Lösungen darstellen. Die den eigenständigen erfinderischen Lösungen zugrundeliegende Aufgabe kann der Beschreibung entnommen werden.

Sämtliche Angaben zu Wertebereichen in gegenständlicher Beschreibung sind so zu verstehen, dass diese beliebige und alle Teilbereiche daraus mitumfassen, z.B. ist die Angabe 1 bis 10 so zu verstehen, dass sämtliche Teilbereiche, ausgehend von der unteren Grenze 1 und der oberen Grenze 10 mit umfasst sind, d.h. sämtliche Teilbereiche beginnen mit einer unteren Grenze von 1 oder größer und enden bei einer oberen Grenze von 10 oder weniger, z.B. 1 bis 1,7, oder 3,2 bis 8,1, oder 5,5 bis 10.

Der Ordnung halber sei abschließend darauf hingewiesen, dass zum besseren Verständnis des Aufbaus Elemente teilweise unmaßstäblich und/oder vergrößert und/oder verkleinert dargestellt wurden.

### Bezugszeichenaufstellung

| | | | |
|---|---|---|---|
| 1 | Greiferanordnung | 30 | Unterwerkzeug |
| | | 31 | hohlzylindrischer Körper |
| 2 | Werkstück | 32 | Permanentmagnet |
| 3 | Verbindungsschnittstelle | 33 | druckbeaufschlagbares Element |
| 4 | Manipulator | 34 | Saugnapf |
| 5 | Zangengreifer | | |
| 6 | erster Zangenarm | | |
| 7 | zweiter Zangenarm | | |
| 8 | Zangenantrieb | | |
| 9 | geschlossene Position | | |
| 10 | Klemmebene | | |
| 11 | Zangenlängsachse | | |
| 12 | Haftgreifer | | |
| 13 | Unterdruck-Greiferelement | | |
| 14 | Magnet-Greiferelement | | |
| 15 | Haftwirkungsebene | | |
| 16 | Verstellantrieb | | |
| 17 | Verstellachse | | |
| 18 | Arbeitszone | | |
| 19 | B ereitschaftszone | | |
| 20 | Zentralachse | | |
| 21 | Schwenkachse | | |
| 22 | Stirnende | | |
| 23 | Anschlag- oder Sperrelement | | |
| 24 | Steuervorrichtung | | |
| 25 | geöffnete Position | | |
| 26 | druckbetriebener Zylinder | | |
| 27 | ringförmiger Zylinderraum | | |
| 28 | Zylinderachse | | |
| 29 | Biegemaschine | | |

## Patentansprüche

1. Greiferanordnung (1) zum Aufgreifen, Halten und Ablegen von Blechwerkstücken, umfassend
- eine Verbindungsschnittstelle (3) zur Befestigung an einem Manipulator (4),
- einen Zangengreifer (5) mit einem ersten Zangenarm (6) und einem zweiten Zangenarm (7),
-- wobei die Zangenarme (6, 7) mittels eines Zangenantriebs (8) zueinander relativbeweglich sind und in ihrer geschlossenen Position (9) eine zwischen den Zangenarmen (6, 7) verlaufende Klemmebene (10) definieren, und
-- wobei die Zangenarme (6, 7) in ihrer geschlossenen Position (9) eine parallel zu den Zangenarmen (6, 7) und in der Klemmebene (10) verlaufende Zangenlängsachse (11) definieren,
- einen Haftgreifer (12) mit zumindest einem Unterdruck-Greiferelement (13) oder mit zumindest einem Magnet-Greiferelement (14),
-- wobei der Haftgreifer (12) eine Haftwirkungsebene (15) zum Halten eines Blechstücks aufweist,
-- wobei der Haftgreifer (12) mittels eines Verstellantriebs (16) entlang einer Verstellachse (17) in Richtung der Zangenlängsachse (11) relativ zum Zangengreifer (5) zwischen einer Arbeitszone (18) und einer Bereitschaftszone (19) verschiebbar ist,
- wobei die Klemmebene (10) und die Haftwirkungsebene (15) zueinander rechtwinkelig ausgerichtet sind, und
- wobei die Haftwirkungsebene (15) rechtwinkelig zur Zangenlängsachse (11) verläuft wobei
- der zweite Zangenarm (7) gegenüber dem Zangenantrieb (8) starr angeordnet ist und der erste Zangenarm (6) relativ zum zweiten Zangenarm (7) beweglich gelagert ist, und
- eine Schwenkachse (21) des ersten Zangenarms (6) rechtwinkelig zur Zangenlängsachse (11) und parallel zur Klemmebene (10) oder in der Klemmebene (10) ausgebildet ist, wobei der erste Zangenarm (6) um die Schwenkachse (21) schwenkbar ausgebildet ist.

2. Greiferanordnung (1) nach Anspruch 1, **dadurch gekennzeichnet, dass** die Zangenlängsachse (11) und die Verstellachse (17) koaxial positioniert sind.

3. Greiferanordnung (1) nach Anspruch 1, **dadurch gekennzeichnet, dass** die Zangenlängsachse (11) und die Verstellachse (17) lageverschieden positioniert sind.

4. Greiferanordnung (1) nach einem der vorhergehenden Ansprüche, **dadurch gekennzeichnet, dass** zumindest drei Unterdruck-Greiferelemente (13) oder zumindest drei Magnet-Greiferelemente (14) ausgebildet sind, welche ringförmig um die Zangenlängsachse (11) angeordnet sind.

5. Greiferanordnung (1) nach einem der vorhergehenden Ansprüche, **dadurch gekennzeichnet, dass** die Zangenlängsachse (11) und eine Zentralachse (20) der Verbindungsschnittstelle (3) zu einem Manipulator (4) koaxial positioniert sind.

6. Greiferanordnung (1) nach einem der Ansprüche 1 bis 5, **dadurch gekennzeichnet, dass** der erste Zangenarm (6) und der zweite Zangenarm (7) zueinander linearbeweglich sind.

7. Greiferanordnung (1) nach einem der vorhergehenden Ansprüche, **dadurch gekennzeichnet, dass** die Haftwirkungsebene (15) bei Einnahme der axial äußersten Arbeitszone (18) des Haftgreifers (12) ein Stirnende (22) des Zangengreifers (5) in axialer Richtung der Verstellachse (17) überragt.

8. Greiferanordnung (1) nach einem der vorhergehenden Ansprüche, **dadurch gekennzeichnet, dass** die Zangenarme (6, 7) bei in die Arbeitszone (18) verschobenem Haftgreifer (12) mittels wenigstens eines Anschlag- oder Sperrelements (23) oder gesteuert durch eine Steuervorrichtung (24) nicht in eine teilweise oder maximal geöffnete Position (25) überführbar sind.

9. Greiferanordnung (1) nach einem der vorhergehenden Ansprüche, **dadurch gekennzeichnet, dass** der Zangenantrieb (8) und der Verstellantrieb (16) unabhängig voneinander und gleichzeitig aktivierbar sind.

10. Greiferanordnung (1) nach einem der vorhergehenden Ansprüche, **dadurch gekennzeichnet, dass** der Zangenantrieb (8) und/oder der Verstellantrieb (16) einen druckbetriebenen Zylinder (26) umfasst, bevorzugt einen Pneumatikzylinder umfasst.

11. Greiferanordnung (1) nach Anspruch 10, **dadurch gekennzeichnet, dass** die druckbetriebenen Zylinder (26) mittels einer gemeinsamen Druckleitung druckbeaufschlagbar sind, wobei in der Druckleitung zumindest ein Ventil ausgebildet ist, welches Ventil mittels einer Steuervorrichtung (24) steuerbar ist.

12. Greiferanordnung (1) nach Anspruch 11, **dadurch gekennzeichnet, dass** das Ventil dazu ausgebildet ist, die druckbetriebenen Zylinder (26) und das zumindest eine Unterdruck-Greiferelement (13) oder das zumindest eine Magnet-Greiferelement (14) zeitgleich zu versorgen.

13. Greiferanordnung (1) nach einem der Ansprüche 10 bis 12, **dadurch gekennzeichnet, dass** der druckbetriebene Zylinder (26) des Verstellantriebs (16) einen ringförmigen Zylinderraum (27) aufweist, welcher ringförmige Zylinderraum (27) um den druckbetriebenen Zylinder (26) des Zangenantriebs (8) angeordnet ist, wobei eine Zylinderachse (28) des druckbetriebenen Zylinders (26) koaxial zur Verstellachse (17) positioniert ist.

14. Manipulator (4) mit einer Greiferanordnung (1) zum Aufgreifen, Halten und Ablegen von Werkstücken (2), insbesondere von Blechwerkstücken, **dadurch gekennzeichnet, dass** die Greiferanordnung (1) nach einem der Ansprüche 1 bis 13 ausgebildet ist.

## Claims

1. A gripping arrangement (1) for gripping, holding and placing down sheet metal workpieces, comprising
- a connection interface (3) for attachment to a manipulator (4),
- a pincer gripper (5) having a first pincer arm (6) and a second pincer arm (7),
-- wherein the pincer arms (6, 7) are movable relative to one another by means of a pincer drive (8) and, in their closed position (9), define a clamping plane (10) extending between the pincer arms (6, 7), and
-- wherein the pincer arms (6, 7) in their closed position (9) define a longitudinal pincer axis (11) extending parallel to the pincer arms (6, 7) and in the clamping plane (10),
- an adhesion gripper (12) having at least one vacuum gripping element (13) or having at least one magnetic gripper element (14),
-- wherein the adhesion gripper (12) comprises a plane of adhesive action (15) for holding a sheet metal workpiece,
-- wherein the adhesion gripper (12) is displaceable along an adjustment axis (17) in the direction of the longitudinal pincer axis (11) relative to the pincer gripper (5) between a working zone (18) and a stand-by zone (19) by means of an adjustment drive (16),
- wherein the clamping plane (10) and the plane of adhesive action (15) are aligned at a right angle to one another, and
- wherein the plane of adhesive action (15) extends at a right angle to the longitudinal pincer axis (11),
wherein
- the second pincer arm (7) is arranged rigidly in relation to the pincer drive (8) and the first pincer arm (6) is mounted so as to be movable relative to the second pincer arm (7), and
- a pivot axis (21) of the first pincer arm (6) is formed at a right angle to the longitudinal pincer axis (11) and parallel to the clamping plane (10) or in the clamping plane (10), wherein the first pincer arm (6) is formed to be pivotable about the pivot axis (21).

2. The gripping arrangement (1) according to claim 1, **characterized in that** the longitudinal pincer axis (11) and the adjustment axis (17) are positioned coaxially.

3. The gripping arrangement (1) according to claim 1, **characterized in that** the longitudinal pincer axis (11) and the adjustment axis (17) are positioned in different orientations.

4. The gripping arrangement (1) according to one of the preceding claims, **characterized in that** at least three vacuum gripping elements (13) or at least three magnetic gripper elements (14) are formed, which are arranged annularly around the longitudinal pincer axis (11).

5. The gripping arrangement (1) according to one of the preceding claims, **characterized in that** the longitudinal pincer axis (11) and a central axis (20) of the connection interface (3) are positioned coaxially to a manipulator (4).

6. The gripping arrangement (1) according to one of claims 1 to 5, **characterized in that** the first pincer arm (6) and the second pincer arm (7) are linearly movable with respect to one another.

7. The gripping arrangement (1) according to one of the preceding claims, **characterized in that** the plane of adhesive action (15), when the axially outermost working zone (18) of the adhesion gripper (12) is taken, projects beyond an end face (22) of the pincer gripper (5) in the axial direction of the adjustment axis (17).

8. The gripping arrangement (1) according to one of the preceding claims, **characterized in that** the pincer arms (6, 7), by means of at least one stop or locking element (23) or controlled by a controller (24), cannot be transferred to a partially or fully open position (25) when the adhesion gripper (12) is moved into the working zone (18).

9. The gripping arrangement (1) according to one of the preceding claims, **characterized in that** the pincer drive (8) and the adjustment drive (16) can be activated independently of one another and simultaneously.

10. The gripping arrangement (1) according to one of the preceding claims, **characterized in that** the pincer drive (8) and/or the adjustment drive (16) comprises a pressure-driven cylinder (26), preferably a pneumatic cylinder.

11. The gripping arrangement (1) according to claim 10, **characterized in that** the pressure-driven cylinders (26) can be acted upon by pressure by means of a joint pressure line, wherein at least one valve is formed in the pressure line, said valve being controllable by means of the controller (24).

12. The gripping arrangement (1) according to claim 11, **characterized in that** the valve is configured for simultaneously supplying the pressure-driven cylinders (26) and the at least one vacuum gripping element (13) or the at least one magnetic gripper element (14).

13. The gripping arrangement (1) according to one of claims 10 to 12, **characterized in that** the pressure-driven cylinder (26) of the adjustment drive (16) comprises an annular cylinder space (27), which annular cylinder space (27) is arranged around the pressure-driven cylinder (26) of the pincer drive (8), wherein a cylinder axis (28) of the pressure-driven cylinder (26) can be positioned coaxially to the adjustment axis (17).

14. A manipulator (4) having a gripping arrangement (1) for gripping, holding and placing down workpieces (2), in particular sheet metal workpieces, **characterized in that** the gripping arrangement (1) is designed according to one of claims 1 to 13.

## Revendications

1. Agencement de préhension (1) pour saisir, maintenir et déposer des pièces de tôle, comprenant
- une interface de liaison (3) en vue de la fixation sur un manipulateur (4),
- une pince de préhension (5) avec un premier bras de pince (6) et un deuxième bras de pince (7), les bras de pince (6, 7) étant mobiles l'un par rapport à l'autre au moyen d'un entraînement de pince (8) et, dans leur position fermée (9), définissant un plan de serrage (10) s'étendant entre les bras de pince (6, 7), et
- les bras de pince (6, 7), dans leur position fermée (9), définissant un axe longitudinal de préhension (11) s'étendant parallèlement aux bras de pince (6, 7) et dans le plan de serrage (10),
- une ventouse de préhension (12) avec au moins un élément de préhension par pression négative (13) ou avec au moins un élément de préhension magnétique (14),
- la ventouse de préhension (12) présentant un plan adhésif (15) pour maintenir une pièce de tôle,
- la ventouse de préhension (12) pouvant être déplacée par rapport à la pince de préhension (5) entre une zone de travail (18) et une zone de préparation (19) au moyen d'un entraînement de réglage (16) le long d'un axe de réglage (17) dans la direction de l'axe longitudinal de préhension (11),
- le plan de serrage (10) et le plan adhésif (15) étant alignés perpendiculairement l'un par rapport à l'autre, et
- le plan adhésif (15) s'étendant perpendiculairement à l'axe longitudinal de préhension (11),
- le deuxième bras de pince (7) étant agencé de manière rigide par rapport à l'entraînement de pince (8) et
- le premier bras de pince (6) étant monté mobile par rapport au deuxième bras de pince (7), et
- un axe de pivotement (21) du premier bras de pince (6) étant conçu perpendiculairement à l'axe longitudinal de préhension (11) et parallèlement au plan de serrage (10) ou dans le plan de serrage (10), le premier le bras de pince (6) étant conçu pour pouvoir pivoter autour de l'axe de pivotement (21).

2. Agencement de préhension (1) selon la revendication 1, **caractérisé en ce que** l'axe longitudinal de préhension (11) et l'axe de réglage (17) sont positionnés coaxialement.

3. Agencement de préhension (1) selon la revendication 1, **caractérisé en ce que** l'axe longitudinal de préhension (11) et l'axe de réglage (17) sont positionnés dans des positions différentes.

4. Agencement de préhension (1) selon l'une des revendications précédentes, **caractérisé en ce qu'**au moins trois éléments de préhension par pression négative (13) ou au moins trois éléments de préhension magnétiques (14) sont formés, qui sont agencés en forme d'anneau autour de l'axe longitudinal de préhension (11).

5. Agencement de préhension (1) selon l'une des revendications précédentes, **caractérisé en ce que** l'axe longitudinal de préhension (11) et un axe central (20) de l'interface de liaison (3) sont positionnés coaxialement par rapport à un manipulateur (4).

6. Agencement de préhension (1) selon l'une des revendications 1 à 5, **caractérisé en ce que** le premier bras de pince (6) et le deuxième bras de pince (7) sont mobiles linéairement l'un par rapport à l'autre.

7. Agencement de préhension (1) selon l'une des revendications précédentes, **caractérisé en ce que** le plan adhésif (15), lorsqu'il occupe la zone de travail la plus extérieure (18) axialement de la ventouse de préhension (12), fait saillie au-delà d'une extrémité avant (22) de la pince de préhension (5) dans la direction axiale de l'axe de réglage (17).

8. Agencement de préhension (1) selon l'une des revendications précédentes, **caractérisé en ce que**,
lorsque la ventouse de préhension (12) est déplacée dans la zone de travail (18), les bras de pince (6, 7) ne peuvent être déplacés dans une position partiellement ou maximalement ouverte (25) au moyen d'au moins une butée ou un élément de verrouillage (23) ou commandés par un dispositif de commande (24).

9. Agencement de préhension (1) selon l'une des revendications précédentes, **caractérisé en ce que** l'entraînement de pince (8) et l'entraînement de réglage (16) peuvent être activés indépendamment l'un de l'autre et en même temps.

10. Agencement de préhension (1) selon l'une des revendications précédentes, **caractérisé en ce que** l'entraînement de pince (8) et/ou l'entraînement de réglage (16) comprennent un cylindre actionné par pression (26), de préférence un cylindre pneumatique.

11. Agencement de préhension (1) selon la revendication 10, **caractérisé en ce que** les cylindres actionnés par pression (26) peuvent être mis sous pression au moyen d'une conduite de pression commune, au moins une soupape étant formée dans la conduite de pression, laquelle soupape peut être commandée au moyen d'un dispositif de commande (24).

12. Agencement de préhension (1) selon la revendication 11, **caractérisé en ce que** la soupape est conçue pour alimenter simultanément les cylindres actionnés par pression (26) et le au moins un élément de préhension par pression négative (13) ou le au moins un élément de préhension magnétique (14).

13. Agencement de préhension (1) selon l'une des revendications 10 à 12, **caractérisé en ce que** le cylindre actionné par pression (26) de l'entraînement de réglage (16) présente un espace cylindrique annulaire (27), lequel espace cylindrique annulaire (27) est agencé autour du cylindre actionné par pression (26) de l'entraînement de pince (8), un axe de cylindre (28) du cylindre actionné par pression (26) étant positionné coaxialement par rapport à l'axe de réglage (17).

14. Manipulateur (4) avec un agencement de préhension (1) pour saisir, maintenir et placer des pièces (2), en particulier des pièces de tôle, **caractérisé en ce que** l'agencement de préhension (1) est conçu selon l'une des revendications 1 à 13.
